Europäisches Patentamt

European Patent Office

Office européen des brevets

(19)

(11) EP 0 990 623 A1

(12) DEMANDE DE BREVET EUROPEEN

(43) Date de publication:
05.04.2000 Bulletin 2000/14

(51) Int Cl.$^7$: C03B 3/02

(21) Numéro de dépôt: 99402379.4

(22) Date de dépôt: 29.09.1999

(84) Etats contractants désignés:
AT BE CH CY DE DK ES FI FR GB GR IE IT LI LU
MC NL PT SE
Etats d'extension désignés:
AL LT LV MK RO SI

(30) Priorité: 02.10.1998 FR 9812379

(71) Demandeur: L'AIR LIQUIDE, SOCIETE ANONYME POUR
L'ETUDE ET L'EXPLOITATION DES PROCEDES
GEORGES CLAUDE
75321 Paris Cédex 07 (FR)
(72) Inventeurs:
• Samaniego, Jean-Michel, L'Air Liquide S.A.
75321 Paris (FR)
• Bodelin, Pierre, L'Air Liquide S.A.
75321 Paris (FR)
• Heynard, Armelle, L'Air Liquide S.A.
75321 Paris (FR)
• Charon, Olivier, L'Air Liquide S.A.
75321 Paris (FR)

(74) Mandataire: Vesin, Jacques et al
L'AIR LIQUIDE, S.A.,
Service Propriété Industrielle,
75, Quai d'Orsay
75321 Paris Cédex 07 (FR)

(54) **Brûleur pour le chauffage d'un produit pulvérulent, et procédé de vitrification d'un produit pulvérulent mis en oeuvre au moyen d'un tel brûleur**

(57) Le produit est mis en mousse à faible PCI introduite dans un conduit central (32) d'une canne (3) logée dans un canal (1) du brûleur, où circule également un fluide d'atomisation. Un combustible circule dans un conduit annulaire (33) de la canne, et un comburant dans un passage (12) entourant celle-ci. La mousse, accélérée par le fluide, est atomisée en particules solides formant un brouillard, qui sont projetées dans une flamme créée à partir du combustible et du comburant, pour être chauffées et liquéfiées. Par refroidissement, on forme un vitrifiat, et on peut prélever les fumées contenant éventuellement des métaux lourds, pour les diriger vers une installation de traitement des fumées.

Utilisation : vitrification des REFIOM pour réutiliser leur partie inerte, et récupération de leurs éventuels métaux lourds.

FIG.1

**Description**

L'invention concerne le chauffage et la vitrification de produits résiduaires se présentant sous forme pulvérulente, afin par exemple d'en séparer une partie inerte pouvant être stockée ou utilisée librement, et des phases polluantes telles que des métaux lourds qui doivent être stabilisées avant d'être stockées en décharge, ou recyclées et valorisées.

A cette fin, l'invention consiste en un brûleur de chauffage et un procédé de vitrification d'un produit pulvérulent, applicables, notamment, à la transformation des résidus de l'épuration des fumées d'incinération des ordures ménagères connus dans la technique sous le nom de REFIOM, d'une part en un vitrifiat inerte et d'autre part en une fumée ou vapeur dont les éventuels métaux lourds vaporisés sont susceptibles d'être récupérés par une technique de traitement des fumées.

Le brûleur et le procédé selon l'invention ont également pour but la vitrification d'autres solides pulvérulents, par exemple de l'amiante ou des compositions de verre telles que du calcin.

Cependant, un problème posé par le traitement par la chaleur d'un tel produit pulvérulent est le transport de ce produit de la zone où il est obtenu ou stocké à celle où il doit être traité, si ces deux zones ne sont pas éloignées au point de nécessiter un transport par véhicule d'ailleurs problématique pour des produits comportant un composant dangereux ou/et polluant. Dans cette hypothèse où les deux zones sont relativement proches, par exemple parce qu'elles sont sur le même site industriel mais à distance l'une de l'autre, on a pu envisager de placer le solide pulvérulent dans une gaine gazeuse (transport pneumatique) ou en suspension dans un liquide.

Dans le premier cas, le solide doit être parfaitement sec pour s'écouler correctement, et ne pas être réactif à l'égard du gaz porteur ; dans le deuxième cas, la suspension doit être suffisamment liquide pour pouvoir être pompée, mais cependant pas trop pour pouvoir être traitée.

Pour échapper notamment à ces contraintes, et pouvoir transporter un solide pulvérulent d'une zone à une autre à condition qu'elles soient relativement proches, le document FR 2 543 968 et son correspondant EP 123 592 enseignent d'introduire le solide pulvérulent, à savoir une matière riche en carbone telle que du charbon, dans une mousse aqueuse. Plus particulièrement, à partir d'un mélange contenant, en poids, environ 70% de particules d'une matière combustible solide telle que du carbone, environ 1% d'adjuvant tensio-actif moussant, et pour le reste un liquide pouvant être de l'eau ou un liquide combustible, que l'on brasse par exemple mécaniquement ou pneumatiquement afin de l'aérer et d'y incorporer des micro-bulles gazeuses qui se fixent aux extrémités polaires de l'adjuvant tensio-actif moussant, on constitue une mousse fluide à PCI relativement élevé, à vocation énergétique, susceptible d'être utilisée en tant que combustible auxiliaire par les tuyères des haut-fourneaux sidérurgiques, ou d'être brûlée dans des fours industriels ou des centrales thermiques. Cependant, la mousse étant chargée à la pression atmosphérique, peut difficilement être pompée par des équipements classiques par suite de la dégradation du mélange, qui provoque des ruptures d'homogénéité gênantes lorsque l'on désire pulvériser le produit, à l'origine de discontinuités du jet de pulvérisation.

Le document FR 2 543 967 et son correspondant EP 122 846 enseignent la fabrication d'un produit similaire dans lequel, en vue d'améliorer la combustion, la granulométrie des particules peut être choisie très fine par suite de la diminution de la proportion de la phase liquide, cette proportion étant au niveau juste nécessaire pour la formation des pellicules reliant entre elles les particules solides dispersées de façon homogène et limitant les bulles gazeuses occupant les espaces entre les particules ; à cette fin, le solide pulvérulent est introduit dans une mousse dont la pression a été augmentée, ce qui, d'une part, en diminuant la dimension des bulles, provoque un rapprochement des particules et par conséquent une augmentation de la densité du produit, et d'autre part, grâce à la compression du gaz, assure la détente du mélange depuis la zone pressurisée de préparation jusqu'à la zone d'utilisation où règne une pression plus faible. Cependant, pour éviter la formation pratiquement irréversible de grumeaux, le gaz de pressurisation doit être introduit extrêmement lentement, ce qui nuit à l'industrialisation de ce procédé de fabrication d'une mousse auto-propulsive.

On connaît par le document FR 2 663 242, une installation dans laquelle, pour remédier à cet inconvénient, d'une part la mousse est introduite à la pression atmosphérique dans une enceinte comportant un ruban hélicoïdal s'étendant au voisinage des parois latérales de l'enceinte et entraîné en rotation pour agiter la mousse, et d'autre part un gaz comprimé est introduit par une tubulure centrale le long de laquelle sont implantés des injecteurs radiaux et qui est entraînée en rotation autour de son axe en sens inverse du ruban hélicoïdal.

Cependant, tous ces documents qui concernent une mousse à PCI élevé ne donnent aucun enseignement sur les moyens mis en oeuvre pour sa combustion et a fortiori ne font aucune suggestion pour la combustion d'une mousse à faible PCI.

On connaît par ailleurs par le document EP 618 419, un procédé et un brûleur oxy-combustible pour brûler des poussières ; la combustion est effectuée au moyen d'un brûleur destiné à être adapté à la paroi d'un cubilot, et qui est alimenté coaxialement en allant de l'intérieur vers l'extérieur, par un conduit pour l'alimentation en poussières éventuellement dans un courant de gaz, un conduit d'arrivée d'oxygène, et un conduit d'arrivée pour un gaz combustible, l'ensemble étant logé dans une tuyère d'alimentation en air ; le conduit d'arrivée d'oxygène ou le conduit d'arrivée de gaz combustible est supprimé si le courant de gaz amenant la poussière est un courant d'oxygène ou de gaz combustible. Ce document ne donne aucun enseignement sur la structure interne du brûleur, et ne fait aucune suggestion sur la combustion d'une matière pulvérulente intégrée à une mousse.

On connaît également, par le document FR 2 707 189, un procédé et une installation pour vitrifier des cendres intégrées à une mousse dans une enceinte chaude du type four à résistances rayonnantes ou four à arc, ou encore chauffée par oxybrûleurs. Cependant, dans la version où l'enceinte est chauffée par brûleurs, la présence de ceux-ci n'est pas mise à profit pour élever directement la température de la mousse, celle-ci étant introduite dans l'enceinte chaude par un injecteur, éventuellement avec addition d'oxygène, la vitrification étant du type connu dans la technique sous le nom de vitrification flash

On connaît aussi par le document EP 657 695, un brûleur et un procédé pour faire brûler un combustible fluide contenant des produits solides indésirables pouvant atteindre une dimension d'une dizaine de millimètres. Ce brûleur est alimenté coaxialement en allant de l'intérieur vers l'extérieur, par un conduit pour l'alimentation en combustible pouvant contenir des produits solides, un conduit pour un fluide d'atomisation, et un conduit pour un fluide oxydant ; cependant, le brûleur de ce document n'est pas destiné à la combustion et la vitrification des produits solides, au demeurant de grandes dimensions, mais il est seulement destiné à brûler un fluide combustible classique sans que les produits solides qu'il contient gênent la combustion.

En revanche, l'invention a pour but de créer un brûleur destiné à élever la température de produits solides pulvérulents mis en mousse à faible pouvoir calorifique inférieur, permettant d'une part d'extraire et de traiter des vapeurs d'éventuels métaux lourds et d'autre part de former un vitrifiat résiduel à partir des composants inertes.

Ainsi, l'invention concerne un brûleur pour le chauffage d'un solide pulvérulent mis en mousse à faible pouvoir calorifique inférieur sous la forme d'un mélange triphasique solide, eau, et agent tensio-actif, caractérisé en ce qu'il comporte intérieurement un canal débouchant par un ouvreau dans une enceinte de combustion dans laquelle s'étend une flamme issue du brûleur lorsque celui-ci est en fonctionnement, et une canne d'amenée de fluides logée dans ce canal et comportant une enveloppe à distance de la paroi du canal pour délimiter avec elle un passage annulaire pour la circulation d'un comburant en direction de l'ouvreau, et en ce que la canne comporte un conduit central d'atomisation de la mousse présentant des entrées respectivement pour la mousse et pour un fluide d'atomisation, et où la mousse en circulation est accélérée et atomisée par le fluide d'atomisation, en particules solides véhiculées dans le courant de fluide d'atomisation en formant un brouillard jusqu'à l'ouvreau, et un conduit annulaire pour la circulation d'un combustible et s'étendant entre le conduit central et l'enveloppe, le conduit central et le conduit annulaire présentant des régions d'extrémité de sortie vers l'ouvreau respectivement pour le brouillard formé par les particules et le fluide d'atomisation et pour le combustible, comportant des parois s'étendant l'une dans l'autre, dont au moins la paroi intérieure est convergente.

Le brûleur selon l'invention peut de plus présenter une ou plusieurs des caractéristiques suivantes :

- il comporte un canal de forme générale cylindrique auquel se raccorde tronconiquement un ouvreau, la région de raccordement s'évasant en direction de l'enceinte ;
- l'extrémité libre de sortie de la canne se situe approximativement dans un plan de raccordement de l'ouvreau au canal du brûleur ;
- l'ouvreau présente une forme générale tronconique ;
- l'ouvreau débouche dans l'enceinte par une région évasée en direction de celle-ci ;
- la distance L de l'extrémité libre de sortie de la canne à l'extrémité libre de l'ouvreau, et le diamètre D de l'ouvreau, vérifient approximativement la relation $1,5 \leq L/D \leq 1,8$ ;
- la longueur Lo et le diamètre D de l'ouvreau vérifient approximativement la relation $1,9 \leq Lo/D \leq 3,0$ ;
- l'ouvreau débouche dans l'enceinte par une région évasée en direction de celle-ci, et la distance 1 de l'extrémité libre de sortie de la canne à cette région évasée et le diamètre D de l'ouvreau vérifient approximativement la relation $0 \leq 1/D \leq 1,8$ ;
- l'ouvreau débouche dans l'enceinte par une région évasée en direction de celle-ci, et dans cette région, l'angle de la paroi de l'ouvreau avec la direction de circulation des fluides dans la canne est compris environ entre 20 et 35 degrés ;
- le conduit central d'atomisation de la mousse présente une entrée axiale pour la mousse ;
- le conduit central d'atomisation de la mousse présente une entrée latérale pour le fluide d'atomisation ;
- le conduit annulaire pour le combustible comporte une entrée latérale pour le combustible ;
- le fluide d'atomisation est de l'oxygène ;
- le fluide d'atomisation est du gaz naturel ;
- le combustible est du gaz naturel ;
- le comburant est de l'oxygène.

L'invention concerne également un procédé de vitrification d'un produit pulvérulent, dans lequel on prépare une mousse où est introduit le produit pulvérulent, on pressurise cette mousse et on la transfère dans une conduite jusqu'à un brûleur tel que défini plus haut, caractérisé en ce que, la mousse étant en circulation dans le brûleur, on introduit également en circulation dans celui-ci un premier courant de fluide, d'atomisation, que l'on met en présence de la mousse pour accélérer sa circulation et constituer à partir de cette mousse des particules solides véhiculées dans ce premier courant de fluide en formant un brouillard, on injecte les particules solides et le premier courant de fluide dans une flamme produite à partir d'un mélange d'un deuxième courant de fluide, combustible, et d'un troisième courant de fluide, comburant, et ainsi on porte les particules solides à haute température, et on les liquéfie, puis on refroidit le liquide obtenu à partir de gouttes issues des particules liquéfiées afin de constituer un vitrifiat.

Le procédé selon l'invention peut de plus présenter une ou plusieurs des caractéristiques suivantes :

- en aval du brûleur, on prélève des fumées ou vapeurs formées et on les dirige vers une installation de traitement des fumées ;
- on introduit dans le conduit central, en tant que fluide d'atomisation, un gaz à une pression absolue au moins égale à approximativement 2 bars ;
- on dose le rapport de débit massique de gaz d'atomisation sur le débit de mousse, à une valeur comprise approximativement entre 2 et 30 % ;
- le fluide d'atomisation est du gaz naturel combustible, et l'on amène approximativement 50 à 80 % d'un courant de ce gaz naturel au canal central et le reste de ce courant de gaz au conduit annulaire.

Grâce à ces caractéristiques, on réalise l'injection séparée de la mousse chargée en solide, d'un combustible (par exemple gaz naturel) et d'un comburant (par exemple oxygène) ; le combustible et le comburant sont mélangés au niveau du nez du brûleur, ce qui permet la stabilisation et le développement d'une flamme. La mousse chargée en solide est injectée à l'intérieur de la flamme après avoir été atomisée par une partie du combustible ou du comburant ce qui permet d'accélérer le chauffage. Les particules solides convectées par l'écoulement traversent le front de flamme et sont de ce fait très rapidement portées à haute température.

Comme la mousse dans laquelle les produits pulvérulents ont été introduits peut être transférée telle quelle dans un brûleur à la sortie duquel ceux-ci sont chauffés et au moins partiellement liquéfiés, on peut traiter très rapidement de grandes quantités de produit en minimisant les manipulations de celui-ci.

D'autres caractéristiques et avantages de l'invention ressortiront de la description qui va suivre de formes et de modes de réalisation de l'invention illustrés sur les dessins joints dans lesquels :

- la figure 1 est une section longitudinale schématique de l'extrémité de sortie d'un brûleur selon l'invention,
- la figure 2 est une section longitudinale schématique d'une canne d'amenée de fluides équipant un brûleur selon l'invention,
- la figure 3 est une section longitudinale schématique de l'extrémité de sortie d'un brûleur dans une première variante de réalisation, et

- la figure 4 est une section longitudinale schématique de l'extrémité de sortie d'un brûleur dans une deuxième variante de réalisation de l'invention.

Le brûleur illustré par les figures est un brûleur du type oxygène-gaz naturel où une mousse dans laquelle est introduit un solide pulvérulent, est transférée pour être atomisée puis injectée à l'intérieur de la flamme.

Cette mousse est un mélange triphasique solide, eau et agent tensio-actif, dans lequel le solide pulvérulent est par exemple un résidu de l'épuration des fumées d'incinération des ordures ménagères (REFIOM).

Elle n'est intrinséquement pas combustible, compte tenu de son faible pouvoir calorifique inférieur (faible PCI).

Le rôle du brûleur est de chauffer le solide pulvérulent contenu dans la mousse à une température suffisamment élevée pour que ce solide soit liquéfié, et les gouttes formées, contenant uniquement des produits inertes, transférées par exemple par gravité pour constituer, après refroidissement du liquide, un vitrifiat récupérable, tandis que les éventuels métaux lourds sont vaporisés et eux-mêmes récupérés dans une installation de traitement des fluides pour être stabilisés et stockés en décharge, ou recyclés et valorisés.

A cette fin, le brûleur est intégré à un four de vitrification comportant une enceinte de combustion dans laquelle s'étend la flamme du brûleur lorsque celui-ci est en fonctionnement, et pouvant être munie de plusieurs autres brûleurs similaires ; le brûleur comporte un canal 1 débouchant dans l'enceinte de combustion par un ouvreau 2 et dans lequel est logée une canne 3 d'amenée de fluides comportant une enveloppe externe 31 disposée à distance de la paroi interne du canal pour délimiter avec cette paroi interne un passage annulaire pour la circulation d'un comburant en direction de l'ouvreau ; ce comburant est ici, comme on l'a vu, de l'oxygène.

Le pourtour de l'ouvreau et éventuellement une partie ou la totalité de la longueur du pourtour du canal 1 sont en matériau réfractaire.

La canne 3 comporte un conduit central 32 d'atomisation de la mousse dont une région d'extrémité présente une entrée axiale 321 pour la mousse et une entrée latérale 322 (au moyen d'un embout s'étendant approximativement radialement) pour un fluide d'atomisation sous forme gazeuse, par exemple du gaz naturel ou de l'oxygène introduit à une pression de quelques bars pour constituer un milieu propulsif. Autour du conduit central 32 d'atomisation, s'étend, entre ce conduit et l'enveloppe 31 de la canne, un conduit annulaire 33 pour la circulation d'un combustible, ici du gaz naturel, présentant également une entrée latérale 331 au moyen d'un embout s'étendant approximativement radialement. Le conduit central présente une région d'extrémité de sortie vers l'ouvreau formant buse entourée d'une paroi convergente 323 ; le conduit annulaire présente également une région d'extrémité de sortie vers l'ouvreau entourée d'une paroi 332 ici convergente mais pouvant présenter un profil différent constituée par une région de l'enveloppe 31 de la canne, à l'intérieur de laquelle s'étend la paroi convergente 323 entourant le conduit central.

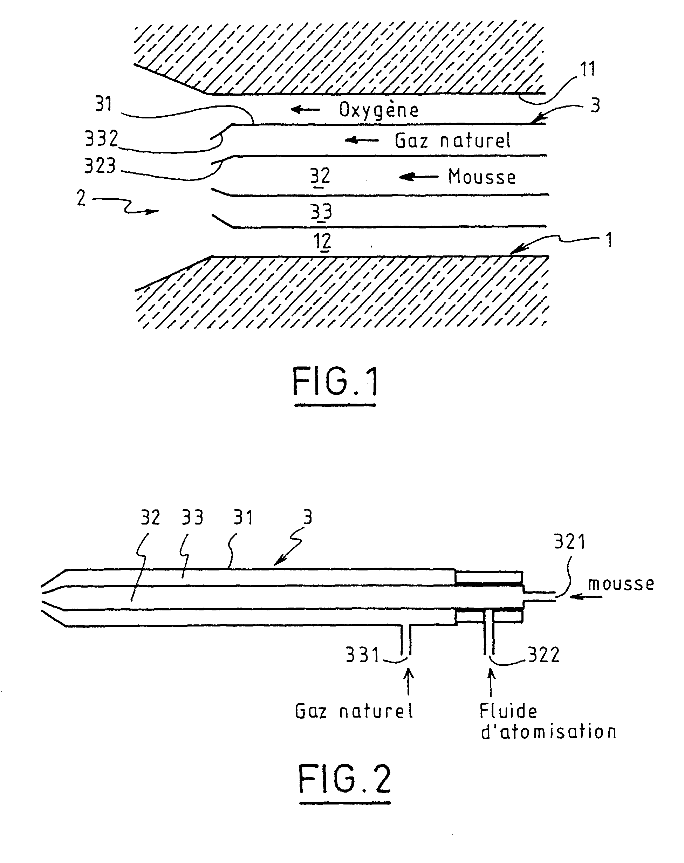

L'ouvreau 2 consiste en une chambre s'ouvrant dans l'enceinte de combustion et prolongeant le canal 1 du brûleur avec une section transversale supérieure à celle de ce canal. Sur la figure 1, l'ouvreau présente une forme générale tronconique s'évasant en direction de l'enceinte, et les extrémités libres de sortie du conduit central 32 et du conduit annulaire 33 pour le combustible se trouvent approximativement dans le plan où l'ouvreau 2 se raccorde au canal 1, ou légèrement en aval.

De préférence, la canne, le canal et l'ouvreau du brûleur présentent une structure générale à sections droites circulaires, et les parois ici convergentes 323, 332 des conduits 32, 33 sont tronconiques ; les troncs de cônes convergent approximativement vers un même point, ou les points de convergence peuvent être décalés, par exemple celui du tronc de cône de la paroi 323 entourant la région d'extrémité du conduit central étant en arrière de celui du tronc de cône de la paroi 332 entourant la région d'extrémité du conduit annulaire si l'on considère la direction d'écoulement des fluides dans la canne, indiquée par des flèches sur la figure 1.

Dans la forme de réalisation de la figure 2, le conduit annulaire 33 de la canne pour la circulation du combustible ne s'étend pas autour de la région du conduit central 32 présentant les entrées 321, 322 pour la mousse et pour le fluide d'atomisation.

Pour mettre en oeuvre le brûleur tel que décrit, on prépare la mousse à faible PCI contenant le solide pulvérulent sous la forme d'un mélange triphasique comme mentionné plus haut, on pressurise cette mousse et on la transfère dans une conduite pour la mettre en circulation dans le conduit central 32 de la canne du brûleur, et on introduit également en circulation dans ce canal 32, le fluide d'atomisation (ici du gaz naturel ou de l'oxygène), que l'on met en présence de la mousse pour accélérer sa circulation et constituer par atomisation à partir de cette mousse des particules solides véhiculées dans le courant de fluide d'atomisation en formant un brouillard jusqu'à l'ouvreau.

Une flamme stable étant produite à partir d'un mélange de combustible mis en circulation dans le conduit annulaire 33 de la canne et en sortant par sa région d'extrémité libre convergente, et de comburant (par exemple de l'oxygène) mis en circulation dans le passage annulaire 12 entourant la canne limité extérieurement par la paroi 11 du brûleur et débouchant par l'ouvreau, on injecte les particules solides et le courant de fluide d'atomisation dans cette flamme par la région d'extrémité libre convergente du conduit central.

Ainsi, on porte les particules solides très rapidement à haute température et on les liquéfie, puis on refroidit le liquide obtenu à partir des gouttes issues des particules liquéfiées afin de constituer le vitrifiat. Egalement en aval du brûleur, on peut prélever les fumées ou vapeurs formées et les diriger vers une installation de traitement des fumées en vue de récupérer d'éventuels métaux lourds vaporisés.

Dans un exemple pratique de réalisation, le fluide d'atomisation est du gaz naturel à une pression absolue au moins égale à 2 bars. Le rapport entre le débit massique de ce gaz et le débit de mousse devant être suffisamment élevé pour obtenir une atomisation de qualité satisfaisante, on le choisit par exemple de l'ordre de 2 à 30%. Dans le même exemple, la proportion de la quantité totale de gaz naturel injectée au brûleur et servant à l'atomisation de la mousse varie entre 50 et 80 %, une grande partie du gaz naturel servant donc à propulser la mousse. Ce gaz naturel se mélange à l'oxygène avec un certain retard, tandis que le reste de débit du gaz naturel qui passe dans le conduit annulaire (20 à 50 %) se mélange immédiatement avec l'oxygène au niveau du nez du brûleur et sert à accrocher la flamme.

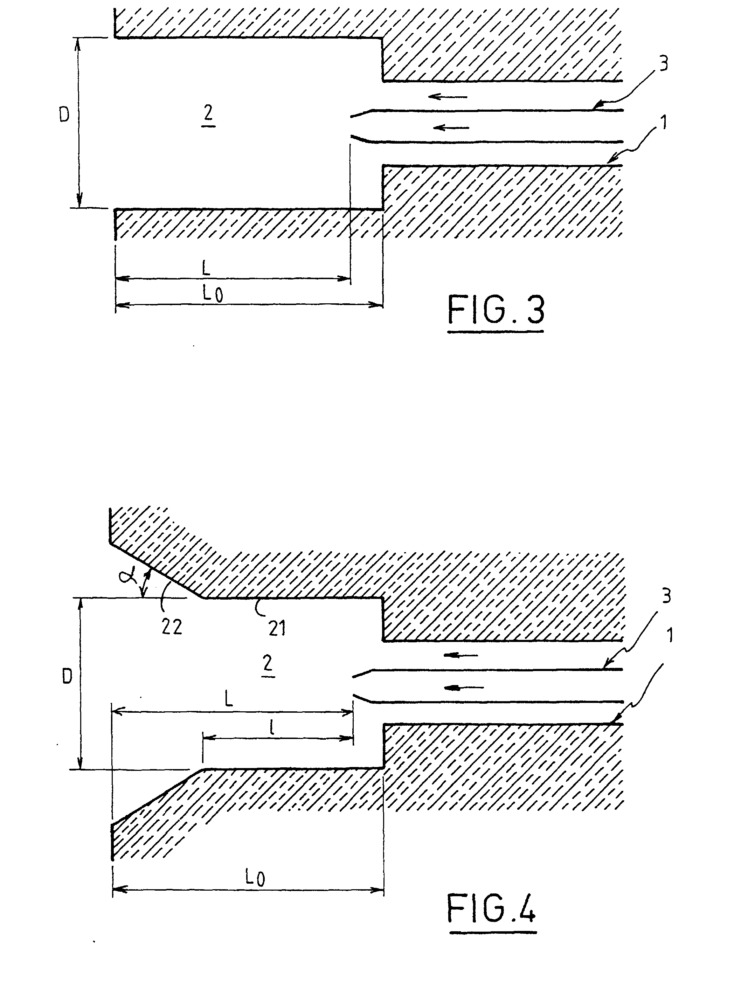

Dans la première variante de réalisation, de la figure 3, l'ouvreau 2 et le canal 1 du brûleur s'étendant dans l'alignement l'un de l'autre présentent une forme générale cylindrique et se raccordent par un épaulement, la canne 3 insérée dans le canal étant en saillie dans l'ouvreau.

D et Lo étant respectivement le diamètre et la longueur de l'ouvreau 2, et L la distance de l'extrémité libre de sortie de la canne à l'extrémité libre de sortie de l'ouvreau (plan dans lequel l'ouvreau se raccorde à l'enceinte de combustion), on a les relations suivantes :

$$1,5 \leq L/D \leq 1,8$$

$$1,9 \leq Lo/D \leq 3,0$$

Dans la deuxième variante de réalisation, de la figure 4, l'ouvreau 2 comporte une région à paroi cylindrique 21 qui se raccorde au canal 1 par un épaulement et débouche dans l'enceinte de combustion par une région à paroi tronconique 22 évasée vers l'enceinte.

Avec les mêmes conventions que précédemment, et de plus l étant la distance de l'extrémité libre de sortie de la canne à l'évasement tronconique de l'ouvreau, et $\alpha$ étant l'angle de la paroi de la région tronconique de l'ouvreau avec la direction de circulation des fluides dans la canne, on a, en plus des relations mentionnées plus haut :

$$0 \leq l/D \leq 1,8$$

$$20° \leq \alpha \leq 35°.$$

**Revendications**

1. Brûleur pour le chauffage d'un solide pulvérulent mis en mousse à faible pouvoir calorifique inférieur sous la forme d'un mélange triphasique solide, eau et agent tensio-actif, caractérisé en ce qu'il comporte intérieurement un canal (1) débouchant par un ouvreau (2) dans une enceinte de combustion dans laquelle s'étend une flamme issue du brûleur lorsque celui-ci est en fonctionnement, et une canne (3) d'amenée de fluides logée dans ce canal et comportant une enveloppe (31) à distance de la paroi (11) du canal pour délimiter avec elle un passage annulaire (12) pour la circulation d'un comburant en direction de l'ouvreau, et en ce que la canne comporte un conduit central (32) d'atomisation de la mousse présentant des entrées (321, 322) respectivement pour la mousse et pour un fluide d'atomisation, et où la mousse en circulation est accélérée et atomisée par le fluide d'atomisation, en particules solides véhiculées dans le courant de fluide d'atomisation en formant un brouillard jusqu'à l'ouvreau, et un conduit annulaire (33) pour la circulation d'un combustible et s'étendant entre le conduit central (32) et l'enveloppe (31), le conduit central (32) et le conduit annulaire (33) présentant des régions d'extrémité de sortie vers l'ouvreau respectivement pour le brouillard formé par les particules et le fluide d'atomisation et pour le combustible, comportant des parois (323, 332) s'étendant l'une dans l'autre, dont au moins la paroi intérieure (323) est convergente.

2. Brûleur selon la revendication 1, caractérisé en ce qu'il comporte un canal (1) de forme générale cylindrique auquel se raccorde tronconiquement un ouvreau (2), la région de raccordement s'évasant en direction de l'enceinte.

3. Brûleur selon la revendication 1, caractérisé en ce que l'extrémité libre de sortie de la canne (3) se situe approximativement dans un plan de raccordement de l'ouvreau (2) au canal (1) du brûleur.

4. Brûleur selon la revendication 1, caractérisé en ce que l'ouvreau (2) présente une forme générale tronconique.

5. Brûleur selon la revendication 1, caractérisé en ce que l'ouvreau (2) débouche dans l'enceinte par une région évasée en direction de celle-ci.

6. Brûleur selon la revendication 1, caractérisé en ce que la distance (L) de l'extrémité libre de sortie de la canne (3) à l'extrémité libre de l'ouvreau (2), et le diamètre (D) de l'ouvreau, vérifient approximativement la relation $1,5 \leq L/D \leq 1,8$.

7. Brûleur selon la revendication 1, caractérisé en ce que la longueur (Lo) et le diamètre (D) de l'ouvreau (2) vérifient approximativement la relation $1,9 \leq Lo/D \leq 3,0$.

8. Brûleur selon la revendication 1, caractérisé en ce que l'ouvreau (2) débouche dans l'enceinte par une région évasée en direction de celle-ci, et la distance (1) de l'extrémité libre de sortie de la canne (3) à cette région évasée et le diamètre (D) de l'ouvreau vérifient approximativement la relation $0 \leq l/D \leq 1,8$.

9. Brûleur selon la revendication 1, caractérisé en ce que l'ouvreau (2) débouche dans l'enceinte par une région évasée en direction de celle-ci, et dans cette région, l'angle de la paroi (22) de l'ouvreau avec la direction de circulation des fluides dans la canne (3) est compris environ entre 20 et 35 degrés.

10. Brûleur selon la revendication 1, caractérisé en ce que le conduit central (32) d'atomisation de la mousse présente une entrée axiale (321) pour la mousse.

11. Brûleur selon la revendication 1, caractérisé en ce que le conduit central (32) d'atomisation de la mousse présente une entrée latérale (322) pour le fluide d'atomisation.

12. Brûleur selon la revendication 1, caractérisé en ce que le conduit annulaire (33) pour le combustible comporte une entrée latérale (331) pour le combustible.

13. Brûleur selon la revendication 1, caractérisé en ce que le fluide d'atomisation est de l'oxygène.

14. Brûleur selon la revendication 1, caractérisé en ce que le fluide d'atomisation est du gaz naturel.

15. Brûleur selon la revendication 1, caractérisé en ce que le combustible est du gaz naturel.

16. Brûleur selon la revendication 1, caractérisé en ce que le comburant est de l'oxygène.

17. Procédé de vitrification d'un produit pulvérulent dans lequel on prépare une mousse où est introduis le produit pulvérulent, on pressurise cette mousse et on la transfère dans une conduite jusqu'à un brûleur selon l'une quelconque des revendications 1 à 16, caractérisé en ce que, la mousse étant en circulation dans le brûleur, on introduit également en circulation dans celui-ci un premier courant de fluide, d'atomisation, que l'on met en présence de la mousse pour accélérer sa circulation et constituer à partir de cette mousse des particules solides véhiculées dans ce premier courant de fluide en formant un brouillard, on injecte les particules solides et le premier courant de fluide dans une flamme produite à partir d'un mélange d'un deuxième courant de fluide, combustible, et d'un troisième courant de fluide, comburant, et ainsi on porte les particules solides à haute température, et on les liquéfie, puis on refroidit le liquide obtenu à partir de gouttes issues des particules liquéfiées afin de constituer un vitrifiat.

**18.** Procédé selon la revendication 17, caractérisé en ce que, en aval du brûleur, on prélève des fumées ou vapeurs formées et on les dirige vers une installation de traitement des fumées.

**19.** Procédé selon la revendication 17, caractérisé en ce que l'on introduit dans le conduit central (32), en tant que fluide d'atomisation, un gaz à une pression absolue au moins égale à approximativement 2 bars.

**20.** Procédé selon la revendication 17, caractérisé en ce que l'on dose le rapport de débit massique de gaz d'atomisation sur le débit de mousse, à une valeur comprise approximativement entre 2 et 30 %.

**21.** Procédé selon la revendication 17, caractérisé en ce que le fluide d'atomisation est du gaz naturel combustible, et l'on amène approximativement 50 à 80 % d'un courant de ce gaz naturel au canal central (32) et le reste de ce courant de gaz au conduit annulaire (33).

FIG.1

FIG.2

FIG.3

FIG.4

**Office européen des brevets**

## RAPPORT DE RECHERCHE EUROPEENNE

Numéro de la demande

EP 99 40 2379

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | FR 2 740 860 A (GAZ DE FRANCE & GAZ METROPOLITAIN...) 9 mai 1997 (1997-05-09) * le document en entier * | 1-21 | C03B3/02 |
| X | DE 14 96 043 A (UNION CARBIDE CORP.) 27 mars 1969 (1969-03-27) * le document en entier * | 1-21 | |
| X | FR 2 120 115 A (TOKYO SHIBAURA ELECTRIC CO.LTD.) 11 août 1972 (1972-08-11) * page 6 - page 9; figure 5 * | 1,17 | |
| X | EP 0 743 286 A (DAIDO TOKUSHUKO KABUSHIKI KAISHA) 20 novembre 1996 (1996-11-20) * colonne 5 - colonne 6; figure 2 * | 1,17 | |

| DOMAINES TECHNIQUES RECHERCHES (Int.Cl.7) |
|---|
| C03B F23D F23G |

Le présent rapport a été établi pour toutes les revendications

| Lieu de la recherche | Date d'achèvement de la recherche | Examinateur |
|---|---|---|
| LA HAYE | 10 janvier 2000 | Van den Bossche, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 40 2379

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-01-2000

| Document brevet cité au rapport de recherche | | Date de publication | Membre(s) de la famille de brevet(s) | | Date de publication |
|---|---|---|---|---|---|
| FR 2740860 | A | 09-05-1997 | US | 5724901 A | 10-03-1998 |
| | | | CA | 2188379 A | 03-05-1997 |
| DE 1496043 | A | 27-03-1969 | FR | 1395208 A | 21-07-1965 |
| | | | GB | 1024595 A | |
| | | | US | 3337324 A | 22-08-1967 |
| FR 2120115 | A | 11-08-1972 | JP | 50003084 B | 31-01-1975 |
| | | | GB | 1333130 A | 10-10-1973 |
| | | | US | 3748113 A | 24-07-1973 |
| EP 743286 | A | 20-11-1996 | JP | 8312938 A | 26-11-1996 |
| | | | AT | 168359 T | 15-08-1998 |
| | | | DE | 69600429 D | 20-08-1998 |
| | | | DE | 69600429 T | 11-02-1999 |

EPO FORM P0460

Pour tout renseignement concernant cette annexe : voir Journal Officiel de l'Office européen des brevets, No.12/82